# EUROPEAN PATENT APPLICATION

(11) **EP 4 675 688 A1**
(43) Date of publication of application: **07.01.2026**
(21) Application number: 24186146.7
(22) Date of filing: 03.07.2024
(51) Int. Cl.: H01M 4/04, H01M 10/04, H01M 10/0585

(54) **BATTERY MANUFACTURING METHOD AND CORRESPONDING BATTERY**

(71) Applicant: LG Energy Solution, Ltd., Seoul 07335 (KR)
(72) Inventor: CHOI, Jin Hyeong, 34122 Daejeon (KR)
(74) Representative: Goddar, Heinz J.

(57) **Abstract**

Disclosed is a battery manufacturing method. A first stack part (10) is formed by applying a positive active material on one of two main surfaces of a first separator sheet (2.1) and applying a negative active material on the other one of the two main surfaces of the first separator sheet. A second stack part (20) is formed by applying the positive active material onto one of two main surfaces of a second separator sheet (2.2) and applying the negative active material onto the other one of the two main surfaces of the second separator sheet. The first stack part and the second stack part are stacked upon each other with a current collector plate interposed between the first stack part and the second stack part.

## Description

### FIELD OF THE INVENTION

The present invention is in the field of secondary batteries. More precisely, the present invention relates to the manufacturing of cell stacks of lithium-ion batteries by stacking anodes, cathodes, separators and current collectors.

### BACKGROUND

Secondary batteries are ubiquitous in modern consumer electronics and increasingly feature in current vehicular technology. Secondary batteries provide a means for storing energy in a stack of two active electrode materials, forming anode and cathode, separated by a separator, with an electrolyte for ion transfer between the active electrode materials. The material stack can be packaged, e.g. by rolling the material stack to obtain a cylindrical cell or by stacking the materials in a prismatic case.

When stacking the materials, it is crucial that an overhang of the anode material is provided with respect to the cathode material arranged opposite the separator between the anode and the cathode material. The anode overhang has been proven to be a non-negligible influencing factor in the ageing trajectory of lithium-ion batteries. It acts through the transfer of active lithium between the anode overhang and the active anode by changing reversibly the cell balancing. The anode overhang enables even distribution of lithium during the charge and discharge process, reducing dendrite growth on the anode surface, so there are passive areas on the anode known as overhang regions that are not opposed by corresponding areas of cathode. The anode overhang thus lowers the risk of short circuits and thermal runaway and therefore improves battery performance and safety.

In battery manufacturing processes known from prior art, the anode material is attached to opposite surfaces of a first current collector, thereby forming a negative electrode and the cathode material is attached to opposite surfaces of a second current collector, thereby forming a positive electrode. After forming the positive electrode and the negative electrode, these layer stacks are then laminated onto opposite sides of a separator.

### SUMMARY OF THE INVENTION

This known method for manufacturing batteries can however lead to reduced battery lifetime due to unintentional misalignments of the negative electrode with respect to the positive electrode when the electrodes are laminated onto the separator. The misalignment can eliminate the essentially important anode overhang or can even lead to a cathode overhang with the above-described implications.

In view of this prior art, it is the objective of the invention is to improve a battery manufacturing method and an according battery such that the risk of short circuits and thermal runaway is reduced and the battery performance and safety is improved.

According to a first aspect, a battery manufacturing method is provided comprising the steps of forming a first stack part by applying a positive active material on one of two main surfaces of a first separator sheet and applying a negative active material on the other one of the two main surfaces of the first separator sheet. The method further comprises forming a second stack part by applying the positive active material onto one of two main surfaces of a second separator sheet and applying the negative active material onto the other one of the two main surfaces of the second separator sheet. Then, the method provides stacking the first stack part and the second stack part upon each other with a current collector plate interposed between the first stack part and the second stack part.

The method can overcome the problems faced in the prior art, where the production of a defined anode overhang is prone to errors due to the manufacturing method in which the active materials are first applied to the current collector and only then to the separator, which means that the performance and service life of the batteries produced in this way cannot be reliably guaranteed.

It is therefore essential for the method according to the invention that the first stack part and the second stack part are produced first, which involve the application of active material to both sides of a separator sheet, and that these stack parts are only then laminated to both sides of a current collector. The negative active material can be anode material. The positive active material can be a cathode material. It can be provided that the positive active material is in physical contact with the separator. It can be provided that the negative active material is in physical contact with the separator. It can be provided that the stack parts are in physical contact with the current collector plate.

It can be provided that the lateral ends of the negative active material protrude laterally beyond the lateral ends of the positive active material in a view perpendicular to the main surfaces of the first separator sheet and/or the second separator sheet. The lateral ends of the active material layers can be defined by the outer edges of the active material layers that extend in particular perpendicular to the main surfaces of the separators.

It is conceivable, that in a view perpendicular to the main surfaces of the first separator sheet or the second separator sheet, a width of the positive active material applied onto the first separator sheet corresponds to the width of the positive active material applied onto the second separator sheet. The width of the negative active material applied onto the first separator sheet can correspond to the width of the negative active material applied onto the second separator sheet. The width of the active material layers can be measured in the direction parallel to the main surface of the separator.

The first stack part and/or the second stack part can be attached to the current collector plate in a manner that the positive active material applied onto the first separator sheet and/or the positive active material applied onto the second separator sheet are in physical contact with the current collector plate.

The first stack part and/or the second stack part can be attached to the current collector plate in a manner that the negative active material applied onto the first separator sheet and/or the negative active material applied onto the second separator sheet are in physical contact with the current collector plate.

It is conceivable that the first stack part and the second stack part are aligned to each other in a view perpendicular to the main surfaces of the first separator sheet or the second separator sheet. The first stack part and the second stack part can be aligned to each other such that the lateral ends of the positive active material on the first separator sheet and the lateral ends of the positive active material on the second separator sheet can be aligned with each other. The lateral ends of the negative active material on the first separator sheet and the lateral ends of the negative active material on the second separator sheet can be aligned with each other in a view perpendicular to the main surfaces of the first separator sheet or the second separator sheet.

The method can further comprise the step of attaching a further current collector plate to the first stack or the second stack at a side opposite to the current collector plate. The current collector plate can be made of or comprise a first conductive material, and the further current collector plate can be made of or comprise a second conductive material different from the first conductive material. The current collector plate can be made of or comprise aluminum. The further current collector plate can be made of or comprise copper.

The method can further comprise the step of forming a third stack part by applying the positive active material onto one of two main surfaces of a third separator sheet and applying the negative active material onto the other one of the two main surfaces of the third separator sheet. It can be provided that the third stack part is stacked on the further current collector plate in a manner that an active material of the second stack part in contact with the further current collector plate and an active material of the third stack part in contact with the further current collector plate are either both positive active materials or both negative active materials.

The invention further refers to a battery obtained by a method according to one of the claims 1-11, wherein the lateral ends of the negative active material protrude laterally beyond the lateral ends of the positive active material in a view perpendicular to the main surfaces of the first separator sheet and/or the second separator sheet, wherein the sections of the negative active material protruding beyond the positive active material are the same size at both lateral ends and wherein the sections of the negative active material protruding beyond the positive active material are the same size at each of the stack parts.

Only the manufacturing process according to the invention can ensure that all stack parts have a constant anode overhang of the negative active material with respect to the positive active material, namely by applying the active materials to both sides of the separator instead of to the current collector as is known from the prior art. This means that if the separator is coated, the gap between the active materials coated on opposite sides of the separator will be uniform. If not the separator but the current collector is coated with active materials, the gap between the active materials on opposite sides of the separator will not be uniform.

The invention further refers to a battery comprising a first stack part comprising a first separator sheet, wherein a positive active material is applied to one of two main surfaces of the first separator sheet and a negative active material is applied to the other one of the surfaces of the first separator sheet. The battery further comprises a second stack part comprising a second separator sheet, wherein the positive active material is applied to one of two main surfaces of the second separator sheet and the negative active material is applied to the other one of the surfaces of the second separator sheet, wherein the first stack part and the second stack part are stacked upon each other with a current collector plate interposed between the first stack part and the second stack part. The positive active material and/or the negative active material can be attached to the separator sheet such that the positive active material is in physical contact with the separator sheet.

The first stack part and the second stack part both can be attached to the current collector plate in a manner that either the positive active material applied onto the first separator sheet and the positive active material applied onto the second separator sheet are in physical contact with the current collector plate. Or the negative active material applied onto the first separator sheet and the negative active material applied onto the second separator sheet can be in physical contact with the current collector plate.

The battery can comprise a further current collector plate attached to the first stack or the second stack at a side opposite to the current collector plate. The further current collector plate can be attached such that it is in physical contact with the active material layer opposite to the active material layer that is attached to the current collector plate, wherein the active material layers are divided by the respective separator sheet.

The lateral ends of the negative active material can protrude laterally beyond the lateral ends of the positive active material in a view perpendicular to the main surfaces of the first separator sheet and/or the second separator sheet.

The sections of the negative active material protruding beyond the positive active material can have the same size at both lateral ends.

The sections of the negative active material protruding beyond the positive active material can have the same size at both the first stack part and the second stack part. Due to the inventive manufacturing process, equal-sized overhang sections can be ensured such that not only both lateral ends of the negative active material of the same stack part but all stack parts have a uniform anode overhang.

The method according to the first aspect may be executed to provide a battery according to the first aspect, and the features of the method may apply to the characteristics of the battery and vice-versa.

### DETAILED DESCRIPTION OF EMBODIMENTS

The features and numerous advantages of the method and the battery according to the present invention will best be understood from a detailed description of preferred embodiments with reference to the accompanying drawings, in which:
- Fig. 1: illustrates the stacking order of a stack of a positive and a negative electrode with a separator in between known from prior art;
- Fig. 2: illustrates the correct alignment of a stack of a positive and a negative electrodes and separators known from prior art;
- Fig. 3: illustrates a problematic misalignment of a stack of a positive and a negative electrodes and separators known from prior art;
- Fig. 4: illustrates an example of the stacking order of a stack of a first and a second electrode with a separator in between according to the invention;
- Fig. 5: illustrates an example of a correct alignment of a stack of a first and a second electrode and separators according to the invention;
- Fig. 6: illustrates an example of an unproblematic misalignment of a stack of a first and a second electrode and separators according to the invention; and
- Fig. 7: illustrates an example of an unproblematic misalignment of a stack of a first, a second and a third electrode and separators according to the invention.

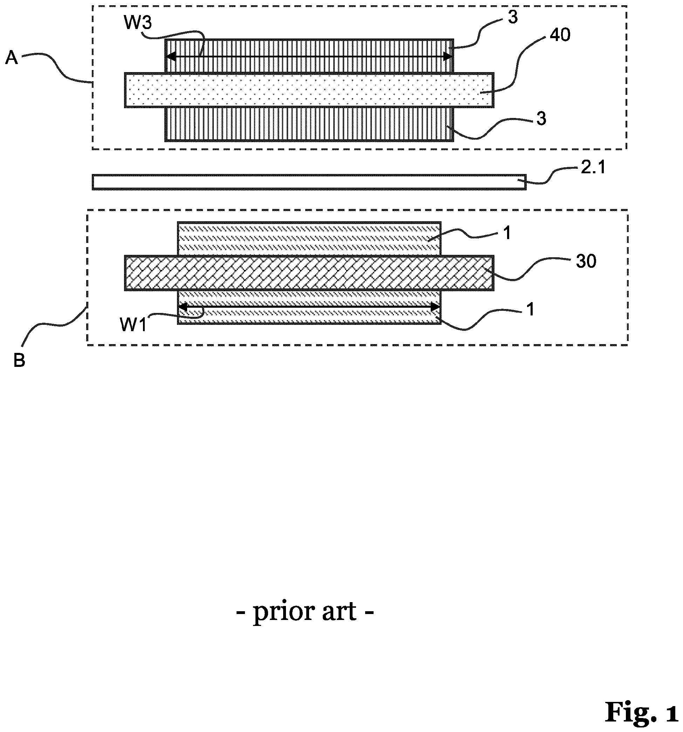

Figures 1-3 illustrate process steps of a manufacturing process known from prior art for producing an electrode stack. First, a negative electrode A and a positive electrode B are produced. To produce electrode A, a layer of negative active material 3 is applied to opposite main surfaces of a current collector plate 40. To produce electrode B, a layer of positive active material 1 is applied to opposite main surfaces of a current collector plate 30. As a result, the electrode A forms a layer stack in the following order: a first layer of the negative active material 3, the current collector 40 and a second layer of the negative active material 3. Correspondingly, electrode B forms a layer stack in the following order: a first layer of the positive active material 1, the current collector 30 and a second layer of the positive active material 1. Only after electrode A and electrode B have been formed the process known from prior art provides for the electrodes to be laminated onto a separator 2.1. The electrodes are connected to the separator 2.1 by bonding a layer of the negative active material 3 of electrode A and a layer of the positive active material 1 of electrode B to opposite sides of the separator 2.1. To produce the anode overhang AO, it is necessary for the electrodes A, B to be aligned with each other when laminating onto the separator 2.1, so that the layer of negative active material 3, which has a larger width W3, overlaps the layer of positive active material 1, which has a smaller width W1, at both lateral ends.

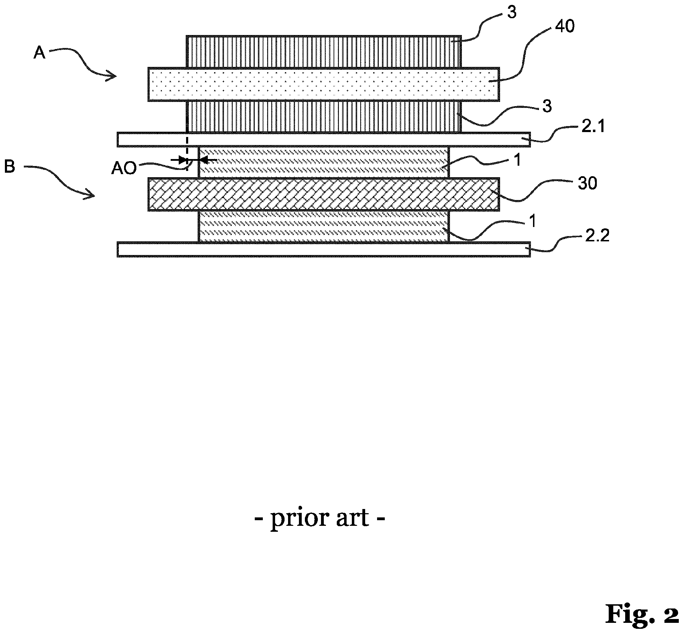

Fig. 2 shows the result of a correctly aligned electrode stack. It can be seen that electrode A and electrode B are attached to the separator 2.1 such that an anode overhang AO is created on both sides of the stack which implicates that both lateral ends of the layer of negative active material 3 attached to the separator sheet 2.1 overlap the corresponding lateral end of the layer of positive active material 1 attached to the opposite side of the separator sheet 2.1.

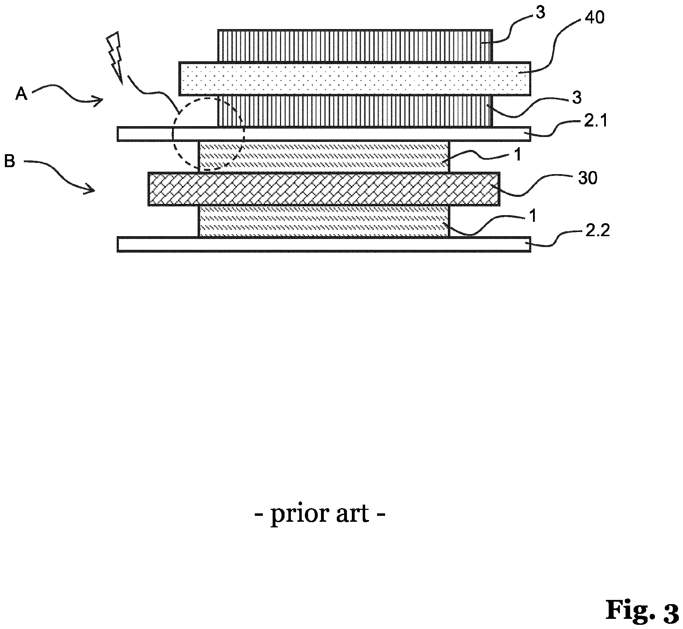

However, since the lamination step is inherently less precise with regard to the alignment of the layers or stacks to be connected with each other, it exists the risk that a misalignment is created between the electrodes A and B by laminating them onto the separator sheet 2.1, as shown in Fig. 3. It can be seen that electrode stack A was laminated too far to the right of electrode stack B on separator foil 2.1. Although this created an (excessively large) anode overhang on the right-hand side of the negative active material 3 compared to the positive active material 1, the stack has a problematic overhang of the positive material 1 compared to the negative material 3 on its left-hand side (illustrated by the dotted circle). This affects the charge and discharge process of the battery and enhances the dendrite growth on the anode surface. This cathode overhang thus increases the risk of short circuits and thermal runaway of the battery.

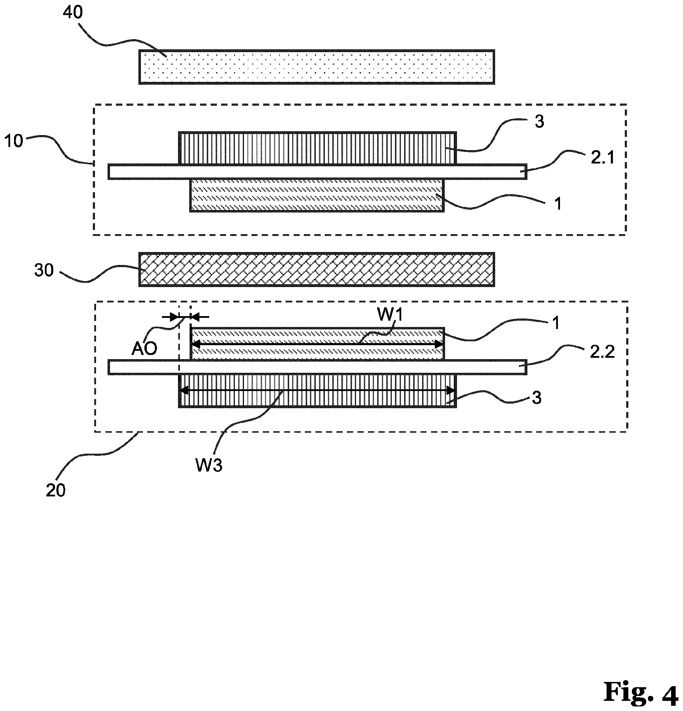

Figs. 4-7 show an example of process steps of a manufacturing process for producing an electrode stack according to the invention. In particular, the invention provides for first producing a first stack part 10 and a second stack part 20 before these are laminated to opposite sides of a current collector 30. To produce electrode 10, a layer of negative active material 1 is applied onto one of two main surfaces of a first separator sheet 2.1 and a layer of positive active material 3 is applied onto the opposite main surface of the first separator sheet 2.1. To produce electrode 20, a layer of negative active material 1 is applied onto one of two main surfaces of a second separator sheet 2.2 and a layer of positive active material 3 is applied onto the opposite main surface of the second separator sheet 2.2. As a result, the electrode 10 forms a layer stack in the following order: a layer of the negative active material 1, the first separator sheet 2.1 and a layer of the positive active material 3. Correspondingly, electrode 20 forms a layer stack in the following order: a layer of the negative active material 3, the second separator sheet 2.2 and a layer of the positive active material 1. Because the application of the active materials 1, 3 to the separator 2.1, 2.2 is more precise than the lamination step of laminating the stacks 10, 20 to the current collector 30, the active materials 1, 3 can be better aligned with each other, minimizing the risk of misalignment with possible loss of anode overhang. By laminating the positive and negative active material 1, 3 directly and in a first process step on both sides of the separator 2.1, 2.2, a significantly more precise and defined generation of an anode overhang AO can be achieved. After the electrode stacks 10, 20 have been produced, they are attached to opposite sides of a current collector 30 so that either the two positive active material layers 1 or the two negative active material layers 3 of the two electrode stacks 10, 20 are in physical contact with the current collector 30. A further current collector 40 is then laminated onto one of the positive or negative material layers 1, 3 of one of the electrode stacks 10, 20 at a side opposite the current collector 30.

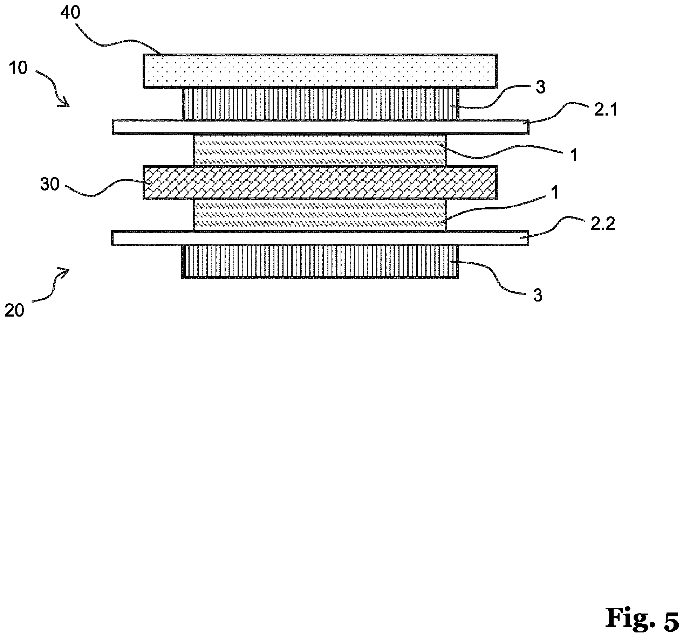

Fig. 5 shows the result of a correctly aligned electrode stack. It can be seen that electrode 10 and electrode 20 are attached to the current collector 30 such that both electrodes 10 and 20 are aligned with each other with respect to the current collector 30. This implicates that the lateral ends of the positive active material layers 1 and the lateral ends of the negative active material layers 3 each are aligned with each other since both positive active material layers 1 have the same width W1 and both negative active material layers 3 have the same width W3.

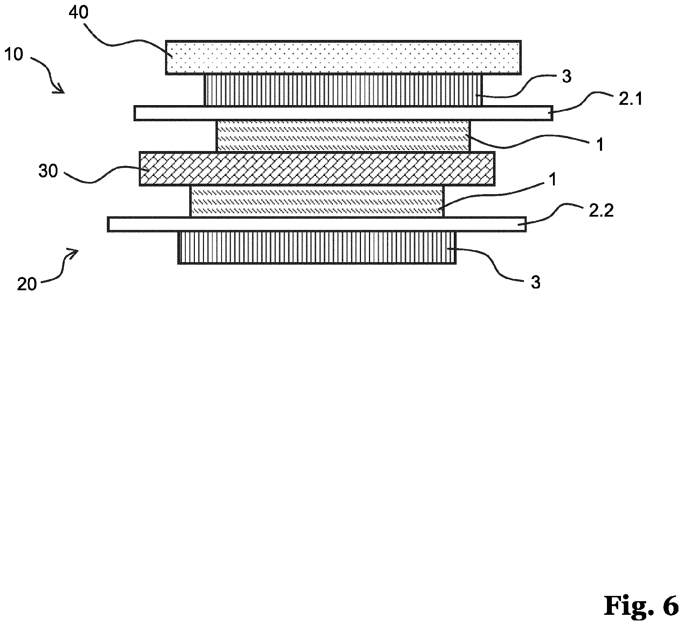

Figure 6 shows the result of an offset electrode stack using the method according to the present invention. As can be seen, the electrode 10 has a lateral offset to the electrode 20, so that the lateral ends of the active positive material layers 1 of the first electrode 10 and the second electrode 20 as well as the lateral ends of the active negative material layers 3 of the first electrode 10 and the second electrode 20 are not aligned, but offset to each other. However, there is still no problem of a missing anode overhang, as the positive and negative active material layers 1, 3 arranged on the opposite sides of the separator surfaces have already been correctly aligned with each other beforehand. As a result, both electrodes 10 and 20 have the desired anode overhangs AO even after the electrodes 10 and 20 have been laminated to the current collector 30.

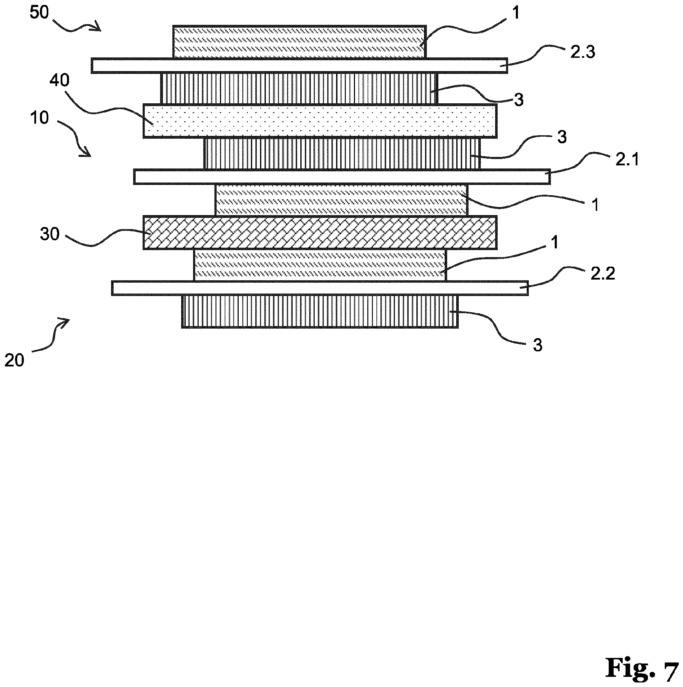

Fig. 7 shows an electrode stack which, compared to the electrode stack of Fig. 6, has a further stack 50 above the further current collector 40, which is aligned like the stack 20, with a layer of a negative active material 3 on the underside and adjacent to the further current collector 40, a third separator 2.3 arranged above the layer of the negative active material 3 and a layer of a positive active material 1 arranged above it. As can be seen, the middle stack 10 and the upper stack 50 also have an offset to each other in relation to the further current collector 40 and yet all anode overhangs of the positive and negative active material layers 1, 3 adjacent to the separator sheets 2.1, 2.2, 2.3 are in the desired configuration, so that a good battery performance and service life is ensured.

The description of the preferred embodiments and the figures merely serve to illustrate the invention and the beneficial effects associated therewith, but should not be understood to imply any limitation. The scope of the invention is to be determined solely by the appended claims.

### LIST OF REFERENCE SIGNS

- 1: positive active material
- 2.1: first separator sheet
- 2.1: second separator sheet
- 3: negative active material
- 10: first stack part
- 20: second stack part
- 30: current collector plate
- 40: further current collector plate
- 50: third stack part
- A: negative electrode
- AO: anode overhang
- B: positive electrode
- W1: width of the positive active material
- W3: width of the negative active material

## Claims

1. A battery manufacturing method, comprising:
forming a first stack part (10) by applying a positive active material (1) on one of two main surfaces of a first separator sheet (2.1) and applying a negative active material (3) on the other one of the two main surfaces of the first separator sheet (2.1);
forming a second stack part (20) by applying the positive active material (1) onto one of two main surfaces of a second separator sheet (2.2) and applying the negative active material (3) onto the other one of the two main surfaces of the second separator sheet (2.2); and
stacking the first stack part (10) and the second stack part (20) upon each other with a current collector plate (30) interposed between the first stack part (10) and the second stack part (20).

2. The battery manufacturing method of claim 1,
wherein the lateral ends of the negative active material (3) protrude laterally beyond the lateral ends of the positive active material (1) in a view perpendicular to the main surfaces of the first separator sheet (2.1) and/or the second separator sheet (2.2).

3. The battery manufacturing method of claim 1 or 2,
wherein in a view perpendicular to the main surfaces of the first separator sheet (2.1) or the second separator sheet (2.2), the width (W1) of the positive active material (1) applied onto the first separator sheet (2.1) corresponds to the width (W1) of the positive active material (1) applied onto the second separator sheet (2.2) and/or the width (W3) of the negative active material (3) applied onto the first separator sheet (2.1) corresponds to the width (W3) of the negative active material (3) applied onto the second separator sheet (2.2).

4. The battery manufacturing method according to one of the claims 1 to 3,
wherein the first stack part (10) and the second stack part (20) are both attached to the current collector plate (30) in a manner that the positive active material (1) applied onto the first separator sheet (2.1) and the positive active material (1) applied onto the second separator sheet (2.2) are in physical contact with the current collector plate (30).

5. The battery manufacturing method according to one of the claims 1 to 3,
wherein the first stack part (10) and the second stack part (20) are both attached to the current collector plate (30) in a manner that the negative active material (3) applied onto the first separator sheet (2.1) and the negative active material (3) applied onto the second separator sheet (2.2) are in physical contact with the current collector plate (30).

6. The battery manufacturing method of any of the preceding claims,
wherein the first stack part (10) and the second stack part (20) are aligned to each other in a view perpendicular to the main surfaces of the first separator sheet (2.1) or the second separator sheet (2.2).

7. The battery manufacturing method of claim 6,
wherein the first stack part (10) and the second stack part (20) are aligned to each other such that the lateral ends of the positive active material (1) on the first separator sheet (2.1) and the lateral ends of the positive active material (1) on the second separator sheet (2.2) are aligned with each other and/or such that that the lateral ends of the negative active material (3) on the first separator sheet (2.1) and the lateral ends of the negative active material (3) on the second separator sheet (2.2) are aligned with each other in a view perpendicular to the main surfaces of the first separator sheet (2.1) or the second separator sheet (2.2).

8. The battery manufacturing method of any of the preceding claims, further comprising:
attaching a further current collector plate (40) to the first stack (10) or the second stack (20) at a side opposite to the current collector plate (30).

9. The battery manufacturing method of claim 8,
wherein the current collector plate (30) is made of a first conductive material, and the further current collector plate (40) is made of a second conductive material different from the first conductive material.

10. The battery manufacturing method of claim 9,
wherein the current collector plate (30) is made of aluminum and wherein the further current collector plate (40) is made of copper.

11. The battery manufacturing method of one of the claims 8 to 10, further comprising:
forming a third stack part (50) by applying the positive active material (10) onto one of two main surfaces of a third separator sheet (2.3) and applying the negative active material (20) onto the other one of the two main surfaces of the third separator sheet (2.3); and
stacking the third stack part (50) on the further current collector plate (40) in a manner that an active material (10, 20) of the second stack part (20) in contact with the further current collector plate (40) and an active material (10, 20) of the third stack part (50) in contact with the further current collector plate (40) are either both positive active materials (10) or both negative active materials (20).

12. A battery obtained by a method according to one of the claims 1-11, wherein the lateral ends of the negative active material (3) protrude laterally beyond the lateral ends of the positive active material (1) in a view perpendicular to the main surfaces of the first separator sheet (2.1) and/or the second separator sheet (2.2), wherein the sections of the negative active material (3) protruding beyond the positive active material (1) are the same size at both lateral ends and wherein the sections of the negative active material (3) protruding beyond the positive active material (1) are the same size at each of the stack parts (10, 20, 50).

13. A battery, comprising:
a first stack part (10) comprising a first separator sheet (2.1), wherein a positive active material (1) is applied to one of two main surfaces of the first separator sheet (2.1) and a negative active material (3) is applied to the other one of the surfaces of the first separator sheet (2.1);
a second stack part (20) comprising a second separator sheet (2.2), wherein the positive active material (1) is applied to one of two main surfaces of the second separator sheet (2.2) and the negative active material (3) is applied to the other one of the surfaces of the second separator sheet (2.2);
wherein the first stack part (10) and the second stack part (20) are stacked upon each other with a current collector plate (30) interposed between the first stack part (10) and the second stack part (20).

14. The battery according to claim 13,
wherein the first stack part (10) and the second stack part (20) are both attached to the current collector plate (30) in a manner that
- either the positive active material (1) applied onto the first separator sheet (2.1) and the positive active material (1) applied onto the second separator sheet (2.2) are in physical contact with the current collector plate (30);
- or the negative active material (3) applied onto the first separator sheet (2.1) and the negative active material (3) applied onto the second separator sheet (2.2) are in physical contact with the current collector plate (30).

15. The battery according to claim 13 or 14,
further comprising a further current collector plate (40) attached to the first stack (10) or the second stack (20) at a side opposite to the current collector plate (30).

16. The battery according to one of the claims 13 to 15,
wherein the lateral ends of the negative active material (3) protrude laterally beyond the lateral ends of the positive active material (1) in a view perpendicular to the main surfaces of the first separator sheet (2.1) and/or the second separator sheet (2.2).

17. The battery according to claim 16,
wherein the sections of the negative active material (3) protruding beyond the positive active material (1) are the same size at both lateral ends.

18. The battery according to claim 17,
wherein the sections of the negative active material (3) protruding beyond the positive active material (1) are the same size at both the first stack part (10) and the second stack part (20).

## Amended claims

### Amended claims in accordance with Rule 137(2) EPC.

1. A battery manufacturing method, comprising:
forming a first stack part (10) by applying a positive active material (1) on one of two main surfaces of a first separator sheet (2.1) and applying a negative active material (3) on the other one of the two main surfaces of the first separator sheet (2.1);
**characterized in that** the method further comprises
forming a second stack part (20) by applying the positive active material (1) onto one of two main surfaces of a second separator sheet (2.2) and applying the negative active material (3) onto the other one of the two main surfaces of the second separator sheet (2.2); and
stacking the first stack part (10) and the second stack part (20) upon each other with a current collector plate (30) interposed between the first stack part (10) and the second stack part (20).

2. The battery manufacturing method of claim 1,
wherein the lateral ends of the negative active material (3) protrude laterally beyond the lateral ends of the positive active material (1) in a view perpendicular to the main surfaces of the first separator sheet (2.1) and/or the second separator sheet (2.2).

3. The battery manufacturing method of claim 1 or 2,
wherein in a view perpendicular to the main surfaces of the first separator sheet (2.1) or the second separator sheet (2.2), the width (W1) in direction parallel to the main surface of the first separator sheet of the positive active material (1) applied onto the first separator sheet (2.1) corresponds to the width (W1) of the positive active material (1) applied onto the second separator sheet (2.2) and/or the width (W3) in direction parallel to the main surface of the second separator sheet of the negative active material (3) applied onto the first separator sheet (2.1) corresponds to the width (W3) of the negative active material (3) applied onto the second separator sheet (2.2).

4. The battery manufacturing method according to one of the claims 1 to 3,
wherein the first stack part (10) and the second stack part (20) are both attached to the current collector plate (30) in a manner that the positive active material (1) applied onto the first separator sheet (2.1) and the positive active material (1) applied onto the second separator sheet (2.2) are in physical contact with the current collector plate (30).

5. The battery manufacturing method according to one of the claims 1 to 3,
wherein the first stack part (10) and the second stack part (20) are both attached to the current collector plate (30) in a manner that the negative active material (3) applied onto the first separator sheet (2.1) and the negative active material (3) applied onto the second separator sheet (2.2) are in physical contact with the current collector plate (30).

6. The battery manufacturing method of any of the preceding claims,
wherein the first stack part (10) and the second stack part (20) are aligned to each other in a view perpendicular to the main surfaces of the first separator sheet (2.1) or the second separator sheet (2.2) such that the lateral ends of the positive active material (1) on the first separator sheet (2.1) and the lateral ends of the positive active material (1) on the second separator sheet (2.2) are aligned with each other and/or such that that the lateral ends of the negative active material (3) on the first separator sheet (2.1) and the lateral ends of the negative active material (3) on the second separator sheet (2.2) are aligned with each other in a view perpendicular to the main surfaces of the first separator sheet (2.1) or the second separator sheet (2.2).

7. The battery manufacturing method of any of the preceding claims, further comprising:
attaching a further current collector plate (40) to the first stack (10) or the second stack (20) at a side opposite to the current collector plate (30).

8. The battery manufacturing method of claim 7,
wherein the current collector plate (30) is made of a first conductive material, and the further current collector plate (40) is made of a second conductive material different from the first conductive material.

9. The battery manufacturing method of claim 8,
wherein the current collector plate (30) is made of aluminum and wherein the further current collector plate (40) is made of copper.

10. The battery manufacturing method of one of the claims 7 to 9, further comprising:
forming a third stack part (50) by applying the positive active material (10) onto one of two main surfaces of a third separator sheet (2.3) and applying the negative active material (20) onto the other one of the two main surfaces of the third separator sheet (2.3); and
stacking the third stack part (50) on the further current collector plate (40) in a manner that an active material (10, 20) of the second stack part (20) in contact with the further current collector plate (40) and an active material (10, 20) of the third stack part (50) in contact with the further current collector plate (40) are either both positive active materials (10) or both negative active materials (20).

11. A battery obtained by a method according to one of the claims 1 to 10, comprising:
a first stack part (10) comprising a first separator sheet (2.1), wherein a positive active material (1) is applied to one of two main surfaces of the first separator sheet (2.1) and a negative active material (3) is applied to the other one of the surfaces of the first separator sheet (2.1);
a second stack part (20) comprising a second separator sheet (2.2), wherein the positive active material (1) is applied to one of two main surfaces of the second separator sheet (2.2) and the negative active material (3) is applied to the other one of the surfaces of the second separator sheet (2.2);
wherein the first stack part (10) and the second stack part (20) are stacked upon each other with a current collector plate (30) interposed between the first stack part (10) and the second stack part (20).

12. The battery according to claim 11,
wherein the first stack part (10) and the second stack part (20) are both attached to the current collector plate (30) in a manner that
- either the positive active material (1) applied onto the first separator sheet (2.1) and the positive active material (1) applied onto the second separator sheet (2.2) are in physical contact with the current collector plate (30);
- or the negative active material (3) applied onto the first separator sheet (2.1) and the negative active material (3) applied onto the second separator sheet (2.2) are in physical contact with the current collector plate (30).

13. The battery according to claim 11 or 12,
further comprising a further current collector plate (40) attached to the first stack (10) or the second stack (20) at a side opposite to the current collector plate (30).

14. The battery according to one of the claims 11 to 13,
wherein the lateral ends of the negative active material (3) protrude laterally beyond the lateral ends of the positive active material (1) in a view perpendicular to the main surfaces of the first separator sheet (2.1) and/or the second separator sheet (2.2).

15. The battery according to claim 14,
wherein the sections of the negative active material (3) protruding beyond the positive active material (1) are the same size at both lateral ends.

16. The battery according to claim 15,
wherein the sections of the negative active material (3) protruding beyond the positive active material (1) are the same size at both the first stack part (10) and the second stack part (20).
